# EUROPEAN PATENT APPLICATION

(11) **EP 1 712 821 A1**
(43) Date of publication of application: **18.10.2006**
(21) Application number: 05703807.7
(22) Date of filing: 19.01.2005
(51) Int. Cl.: F16K 47/10, F15B 11/00, F15B 15/14

(54) **FLOW CONTROL VALVE AND CYLINDER DEVICE WITH FLOW CONTROL VALVE**

(30) Priority: 04.02.2004 JP 2004027701
(71) Applicant: Kosmek Ltd., Hyogo 651-2241 (JP)
(72) Inventor: YONEZAWA, Keitaro c/o KOSMEK LTD. 2-1-2, Murotani, Hyogo 6512241 (JP); ARISATO, Akira c/o KOSMEK LTD. 2-1-2, Murotani, Hyogo 6512241 (JP)
(74) Representative: Horton, Andrew Robert Grant
(86) International application number: PCT/JP2005/000570
(87) International publication number: WO 2005/075867

(57) **Abstract**

Inside a cartridge-type cylindrical casing (40), a meter-out inlet (43), a valve chamber (44), a rod chamber (46), and a meter-out outlet (47) are formed in that order. The rod chamber (46) and the valve chamber (44) are arranged substantially concentrically, and a check valve seat (53) is provided on an inner peripheral surface of a peripheral wall (44a) of the valve chamber (44). A check ball (52) inserted in the valve chamber (44) is urged toward the check valve seat (53) by a spring (54). A throttle valve seat (59) is provided on a leading end portion of an adjusting rod (45) screwed in the rod chamber (46), and a throttle gap (G) is formed between the throttle valve seat (59) and the check ball (52).

## Description

### Technical Field

The present invention relates to a flow control valve having a check function and a throttle function, and a cylinder apparatus attached with the flow control valve.

### Background of the Invention

As such a flow control valve and a cylinder apparatus, conventional ones are described in Patent Document 1 (Japanese Unexamined Patent Publication No. 11-347869).
According to this conventional technique, a manifold type block for supplying and discharging pressurized oil is attached to a housing of a hydraulic cylinder apparatus of a work clamp, and a check member and a throttle member individually provided are arranged in parallel inside the block, and thereby, a flow control valve is constructed.
Patent Document 1: Japanese Unexamined Patent Publication No. 11-347869

### Summary of the Invention

### Problems to be Solved by the Invention

The conventional technique has the following problems.
The check member and the throttle member are individually provided and arranged in parallel, so that the flow control valve becomes large in size.
In addition, a manifold type block must be attached to the housing of the cylinder apparatus, the block projects from the housing and makes the cylinder apparatus large.
An object of the invention is to provide a compact flow control valve. Another object of the invention is to make the cylinder apparatus with the flow control valve small.

### Means for Solving the Problems

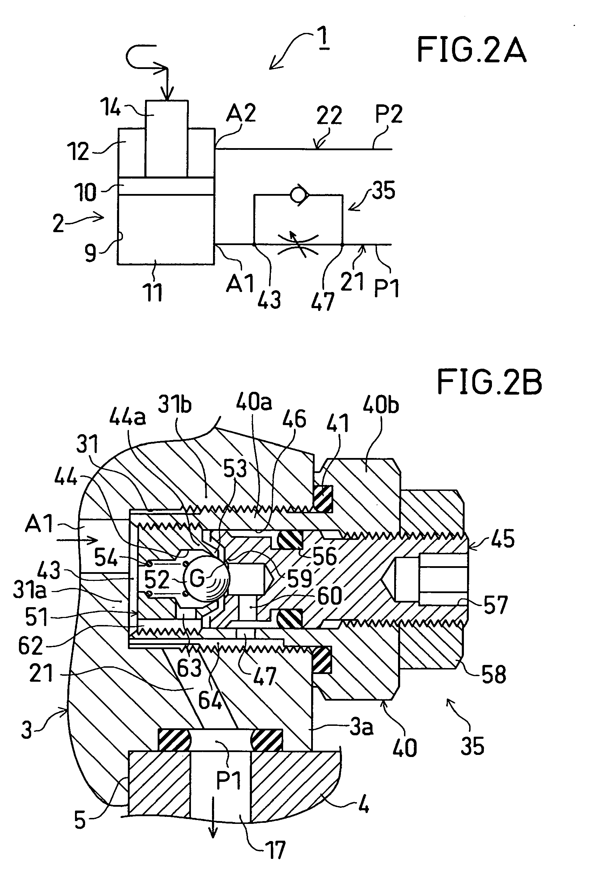

In order to achieve the above-described objects, according to the present invention, for example, as shown in Fig. 2A and Fig. 2B, a flow control valve is constructed as follows.
Inside a cylindrical casing 40, a meter-out inlet 43, a valve chamber 44, a rod chamber 46 for housing an adjusting rod 45 to be advancable and retreatable in an axial direction, and a meter-out outlet 47 are communicatively connected in that order. On a leading end of the adjusting rod 45 is provided a throttle valve seat 59, and the throttle valve seat 59 is communicatively connected to the meter-out outlet 47 via a communicating passage 60 inside the adjusting rod 45. A check member 52 inserted in the valve chamber 44 is urged toward the throttle valve seat 59 by an elastic member 54. By advancing and retreating the adjusting rod 45 in the axial direction, the throttle valve seat 59 and the check member 52 can be relatively moved. Thereby, a throttle gap G formed between at least one of a peripheral wall 44a of the valve chamber 44 and the check member 52 and the throttle valve seat 59 is adjusted.

The present invention brings about the following function and effect.
At least one of the peripheral wall of the valve chamber and the check member is served as a throttle member, so that an exclusive throttle member can be omitted. Therefore, differently from the conventional example in which a check member and a throttle member are individually provided, the flow control valve can be formed compact. Moreover, according to the invention, the number of parts becomes smaller due to the omission of the exclusive throttle member, so that the flow control valve can be manufactured at a low cost.
In addition, the meter-out inlet, the valve chamber, the rod chamber, and the meter-out outlet are communicatively connected in that order, and a throttle valve seat is provided on the adjusting rod inside the rod chamber, so that the throttle valve seat can be arranged inside the rod chamber. Therefore, the outer diameter of the casing becomes smaller, and the flow control valve can be made more compact.

In the invention, preferably, the rod chamber 46 and the valve chamber 44 are arranged substantially concentrically, a check valve seat 53 is provided on an inner peripheral surface of the peripheral wall 44a of the valve chamber 44, and the check member 52 can be brought into contact with the check valve seat 53 by an elastic member 54. In this case, the throttle valve seat can be advanced and retreated in the axial direction with respect to the check member received by the check valve seat, so that the throttle adjusting accuracy increases.

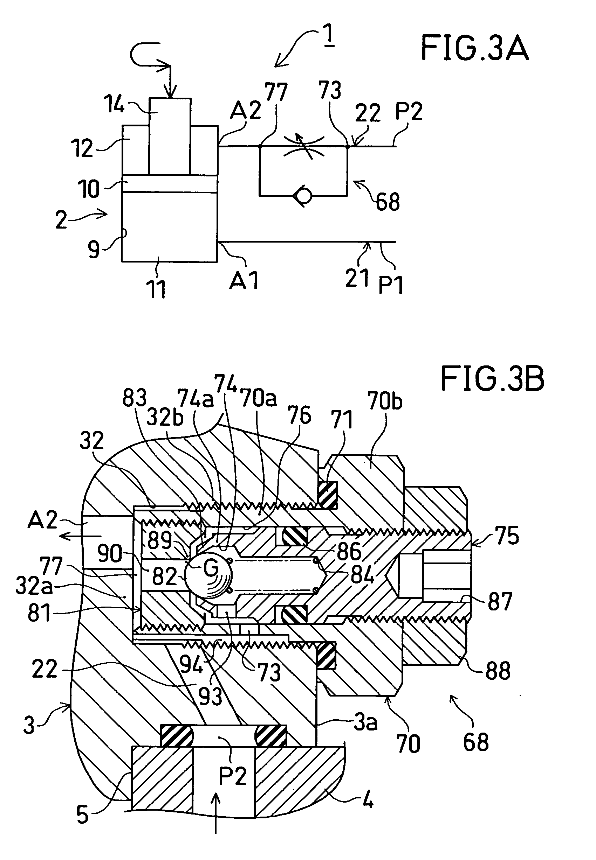

In order to achieve the above-described object, according to the present invention, a flow control valve is constructed as follows, for example, as shown in Fig. 3A and Fig. 3B.
Inside a cylindrical casing 70, a meter-in inlet 73, a rod chamber 76 for housing an adjusting rod 75 to be advancable and retreatable in an axial direction, a throttle valve seat 89 arranged concentrically with the rod chamber 76, and a meter-in outlet 77 are communicatively connected in that order. In at least one of a leading end portion of the adjusting rod 75 and the rod chamber 76, a valve chamber 74 is provided, and a check member 82 inserted in the valve chamber 74 is urged toward the throttle valve seat 89 by an elastic member 84. By advancing and retreating the adjusting rod 75 in the axial direction, the check member 82 and the throttle valve seat 89 can be moved relatively. Thereby, the throttle gap G formed between at least one of a peripheral wall 74a of the valve chamber 74 and the check member 82 and the throttle valve seat 89 is adjusted.

The present invention brings about the following function and effect.
By serving at least one of the peripheral wall of the valve chamber and the check member as a throttle member, an exclusive throttle member can be omitted. Therefore, differently from the conventional example in which the check member and the throttle member are individually provided, the flow control valve can be formed compact. Moreover, according to the invention, the number of parts becomes smaller according to the omission of the exclusive throttle member, so that the flow control valve can be formed at a low cost.
In addition, the meter-in inlet, the rod chamber, the throttle valve seat, and the meter-in outlet are communicatively connected to each other in that order, so that the throttle valve seat and the rod chamber can be arranged in the axial direction of the casing. Therefore, the outer diameter of the casing becomes smaller, and the flow control valve can be made more compact.

In the invention, preferably, the valve chamber 74 is provided in the leading end portion of the adjusting rod 75, a check valve seat 83 is provided on an inner peripheral surface of the peripheral wall 74a of the valve chamber 74, and the check member 82 can be brought into contact with the check valve seat 83 by the elastic member 84. in this case, the check member received by the check valve seat can be advanced and retreated in the axial direction with respect to the throttle valve seat, so that the throttle adjusting accuracy increases.

In order to achieve another object described above, a cylinder apparatus having the flow control valve is constructed as follows, for example, as shown in Fig. 2A and Fig. 2B, or, Fig. 3A and Fig. 3B.
Inside a housing 3 of the cylinder apparatus, a fluid actuation chamber (11, 12) is communicatively connected to a pressure port (P1, P2) via an actuation port (A1, A2) and a supply and discharge passage (21, 22). An mounting hole (31, 32) communicatively connected to the supply and discharge passage (21, 22) is opened in an outer surface of the housing 3, and the cylindrical casing (40, 70) is attached to the mounting hole (31, 32). The actuation port (A1, A2) is communicatively connected to the meter-out inlet 43 or the meter-in outlet 77, and the pressure port (P1, P2) is communicatively connected to the meter-out outlet 47 or the meter-in inlet 73.

In the invention of the cylinder apparatus, an mounting hole to be communicatively connected to the supply and discharge passage inside the housing is provided and the cylindrical casing is only attached to the mounting hole, so that a manifold type block does not project from the housing differently from the conventional example. Therefore, the cylinder apparatus with the flow control valve can be made small in size.
In addition, the flow control valve is constructed as a cartridge type, so that it can be easily replaced for maintenance, and it can be comparatively easily attached to the existing cylinder apparatus.

Furthermore, to achieve another object described above, the cylinder apparatus with the flow control valve is constructed as follows, for example, as shown in Fig. 2A and Fig. 2B, or, Fig. 3A and Fig. 3B.
Inside a housing 3 of the cylinder apparatus, a fluid actuation chamber (11, 12) is communicatively connected to a pressure port (P1, P2) via an actuation port (A1, A2) and a supply and discharge passage (21, 22). An mounting hole (31, 32) opened in an outer surface of the housing 3 is provided. In a bottom surface of the mounting hole (31, 32), one end portion of the supply and discharge passage (21, 22) is opened, and in a peripheral surface of the mounting hole (31, 32), the other end portion of the supply and discharge passage (21, 22) is opened. A cylindrical casing (40, 70) is attached to the mounting hole (31, 32). A leading end portion of the cylindrical casing (40, 70) is brought into contact with or made to approach a bottom wall (31 a, 32a) of the mounting hole (31, 32), and thereby, the actuation port (A1, A2) and the pressure port (P1, P2) are partitioned. Inside the cylindrical casing (40, 70), valve elements (52, 53, and 59) (82, 83, and 89) of a flow control valve (35, 68) are arranged. And, the actuation port (A1, A2) and the pressure port (P1, P2) are able to be communicatively connected via the valve elements.

In the invention of the cylinder apparatus, an mounting hole that is communicatively connected to a supply and discharge passage inside the housing is provided and a cylindrical casing is only attached to the mounting hole, so that differently from the conventional example, a manifold type block does not project from the housing. Therefore, the cylinder apparatus with a flow control valve can be made small in size.
In addition, the flow control valve is constructed as a cartridge type, so that it is easily replaced for maintenance, and it can be comparatively easily attached to the existing cylinder apparatus.
Furthermore, by bringing the leading end portion of the cylindrical casing into contact with the bottom wall of the mounting hole or by making the leading end portion of the cylindrical casing approach the bottom wall of the mounting hole, the actuation port and the pressure port are partitioned, so that the partitioning structure becomes simple. As a result, the cylinder apparatus can be made smaller in size.

In the invention described above, preferably, a barrel portion (40a, 70a) of the cylindrical casing (40, 70) is screwed into the mounting hole (31, 32).

### Brief Description of the Drawings

Fig. 1A is an elevational view of a clamp having a cylinder apparatus with a flow control valve of a first embodiment of the present invention, Fig. 1 B is a partial plan view indicated by the arrow 1 B-1B in Fig. 1A;
Fig. 2A is a hydraulic circuit of the clamp, Fig. 2B is a sectional view of the flow control valve attached to the clamp;
Fig. 3A and Fig. 3B show a second embodiment of the present invention, Fig. 3A is a view similar to Fig. 2A, and Fig. 3B is a view similar to Fig. 2B; and
Fig. 4A, Fig. 4B, and Fig. 4C are partial views similar to Fig. 2B or Fig. 3B, showing exemplary variations of the present invention, respectively.

### Description of the Reference Numerals

3: housing of cylinder apparatus, 11: fluid actuation chamber (release chamber), 12: fluid actuation chamber (lock chamber), 21: first supply and discharge passage, 22: second supply and discharge passage, 31: first mounting hole, 31 a: bottom wall, 32: second mounting hole, 32a: bottom wall, 35: flow control valve, 40: cylindrical casing, 40a: barrel portion, 43: meter-out inlet, 44: valve chamber, 44a: peripheral wall, 45: adjusting rod, 46: rod chamber, 47: meter-out outlet, 52: check member (check ball, valve element), 53: check valve seat (valve element), 54: elastic member (spring), 59: throttle valve seat (valve element), 60: communicating passege, 68: flow control valve, 70: cylindrical casing, 70a: barrel portion, 73: meter-in inlet, 74: valve chamber, 74a: peripheral wall, 75: adjusting rod, 76: rod chamber, 77: meter-in outlet, 82: check member (check ball, valve element), 83: check valve seat (valve element), 84: elastic member (spring), 89: throttle valve seat (valve element), A1: first actuation port, A2: second actuation port, G: throttle gap, P1: first pressure port, P2: second pressure port

### Best Mode for Carrying Out the Invention

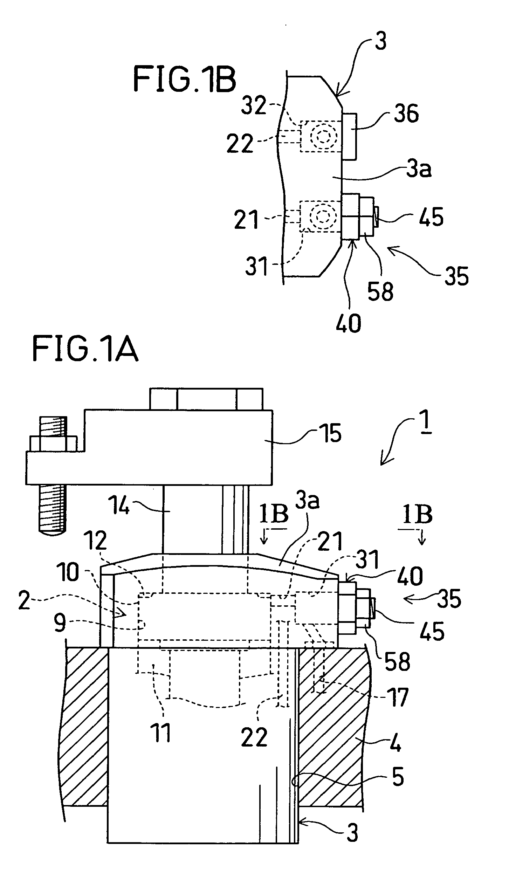

Fig. 1A through Fig. 2B show a first embodiment of the present invention, illustrating a cylinder apparatus with a flow control valve applied to a rotary-type work clamp.
First, the structure of the clamp will be described with reference to Fig. 1A, Fig. 1 B, and Fig. 2A. Fig. 1A is an elevation view of a release state of the clamp. Fig. 1 B is a partial plan view indicated by the arrow 1B-1B in Fig. 1A. Fig. 2A is a circuit diagram of the clamp.

The clamp 1 has a hydraulic double-acting cylinder apparatus 2, and a housing 3 of the cylinder apparatus 2 is inserted into an accommodating hole 5 of a work pallet 4. A flange 3a provided on an upper portion of the housing 3 is fixed onto an upper surface of the work pallet 4 by a plurality of bolts (not shown). Inside the housing 3, a cylinder hole 9 extending vertically is formed. Below a piston 10 inserted in the cylinder hole 9, a release chamber (first fluid actuation chamber) 11 is formed, and above the piston 10, a lock chamber (second fluid actuation chamber) 12 is formed. An arm 15 is fixed to an upper portion of a clamp rod 14 projected vertically from the piston 10, and a known rotary mechanism (not shown) is joined to a lower half of the clamp rod 14.

The above-described rotary clamp operates as follows.
To clamp a work (not shown) carried onto the upper surface of the work pallet 4, in the release state of Fig. 1A, a pressurized oil in the release chamber 11 is discharged to the outside via a first actuation port A1, a first supply and discharge passage 21, a first pressure port P1, and an oil passage 17 inside the work pallet 4, and a pressurized oil as a pressure source is supplied to the lock chamber 12 via another oil passage (not shown) inside the work pallet 4, a second pressure port P2, a second supply and discharge passage 22, and a second actuation port A2 to lower the piston 10. Then, the clamp rod 14 (and the arm 15) is lowered while rotating within a horizontal plane via the rotary mechanism (not shown), and subsequently driven to move straight downward.

To switch the clamp 1 in the above-described lock state into the release state, the pressurized oil in the lock chamber 12 is discharged and a pressurized oil is supplied into the release chamber 11. Thereby, the clamp rod 14 (and the arm 15) at the lowered position is driven to move straight upward, and subsequently returned to rise while rotating.

A first mounting hole 31 communicatively connected to the first supply and discharge passage 21 is opened in an outer surface of the flange 3a, and a second mounting hole 32 communicatively connected to the second supply and discharge passage 22 is opened in the outer surface of the flange 3a. A meter-out flow control valve 35 is detachably attached to the first mounting hole 31, and a plug 36 is detachably attached to the second mounting hole 32. The plug 36, although a detailed structure of this is not shown, is structured so as to secure supply and discharge of the pressurized oil in the second supply and discharge passage 22 and prevents the pressurized oil in the second supply and discharge passage 22 from leaking to the outside through the second mounting hole 32.

The detailed structure of the meter-out flow control valve 35 will be described based on the sectional view of Fig. 2B with reference to Fig. 1A through Fig. 2A.
In a bottom wall 31a of the first mounting hole 31 (bottom surface of the hole), one end portion (the end portion on the first actuation port A1 side) of the first supply and discharge passage 21 is opened eccentrically. In the peripheral wall 31b of the first mounting hole 31 (peripheral surface of the hole), the other end portion (the end portion on the first pressure port P1 side) of the first supply and discharge passage 21 is opened diagonally.
A barrel portion 40a of a cylindrical casing 40 of the meter-out flow control valve 35 is screwed in the first mounting hole 31, and the left end portion (leading end portion) of the barrel portion 40a is brought into contact with the bottom wall 31 a. The contact portion partitions the first actuation port A1 and the first pressure port P1. A head 40b on the right end of the casing 40 is brought into contact with the outer surface of the flange 3a via a sealing member 41.

Inside the casing 40, a meter-out inlet 43 to be communicatively connected to the first actuation port A1, a valve chamber 44, a rod chamber 46 for housing an adjusting rod 45 to be axially advancable and retreatable, and a meter-out outlet 47 to be communicatively connected to the first pressure port P1 are formed in that order.

In detail, a bolt-shaped holder (casing end wall) 51 is screwed inside a left portion of the barrel portion 40a of the casing 40, and a check ball (check member) 52 is inserted in the valve chamber 44 formed inside the holder 51. A check valve seat 53 is formed on an inner peripheral surface of the peripheral wall 44a of the valve chamber 44, and the check ball 52 is brought into contact with the check valve seat 53 by a spring (elastic member) 54.
The valve chamber 44 and the rod chamber 46 are arranged substantially concentrically, the adjusting rod 45 formed in a bolt shape is screwed with the peripheral wall of the rod chamber 46 to be advancable and retreatable, and is hermetically sealed by a packing 56. In a right end portion of the adjusting rod 45, an adjusting hole 57 in which a hexagonal wrench (not shown) is inserted is formed and a lock nut 58 is screwed in.
Furthermore, a throttle valve seat 59 is provided at the center of a left end portion (leading end portion) of the adjusting rod 45. A valve seat hole of the throttle valve seat 59 is communicatively connected to the meter-out outlet 47 via a communicating passage 60 inside the leading end portion of the adjusting rod 45.

By advancing and retreating the adjusting rod 45 in the axial direction according to the screw engagement, the throttle valve seat 59 is moved with respect to the check ball 52, and thereby, a throttle gap G formed between the check ball 52 and the throttle valve seat 59 is adjusted.
Namely, the valve elements of the meter-out flow control valve 35 include the check ball 52, the check valve seat 53, and the throttle valve seat 59, etc.

The meter-out flow control valve 35 operates as follows as shown in Fig. 2A and Fig. 2B.
To discharge the pressurized oil in the first actuation port A1 for releasing to the first pressure port P1, the pressurized oil in the first actuation port A1 is discharged to the first pressure port P1 through the meter-out inlet 43, a peripheral groove 62 and a communicating hole 63 of the holder 51, the throttle gap G, a communicating passage 60 of the adjusting rod 45, the meter-out outlet 47, and a peripheral groove 64 of the barrel portion 40a of the casing 40 in that order. The pressurized oil to be discharged is applied with a great flow resistance during passing through the throttle gap G, so that it is discharged at a low speed.

On the other hand, to supply a pressurized oil from the first pressure port P1 to the first actuation port A1, the pressurized oil in the first pressure port P1 is supplied to the communicating passage 60 through the peripheral groove 64 of the barrel portion 40a and the meter-out outlet 47, and due to its pressure, the check ball 52 is separated from the check valve seat 53. Thereby, the pressurized oil supplied into the communicating passage 60 is smoothly supplied to the first actuation port A1 through the inside of the check valve seat 53, the inside of the valve chamber 44, and the meter-out inlet 43, and smoothly supplied to the first actuation port A1 through the outer peripheral space of the check valve seat 53, the peripheral groove 62, and the meter-out inlet 43.

The first embodiment described above may be changed as follows.
One end portion (the end portion on the first actuation port A1 side) of the first supply and discharge passage 21 is arranged eccentrically to the first mounting hole 31, however, instead of this, it can be arranged concentrically with the first mounting hole 31. The other end portion (the end portion on the first pressure port P1 side) of the first supply and discharge passage 21 is opened diagonally in the peripheral surface of the first mounting hole 31, however, instead of this, it can intersect with the first mounting hole 31 at right angles.
It is preferable that the left end portion (leading end portion) of the barrel portion 40a of the cylindrical casing 40 is brought into strong contact with the bottom wall 31 a of the first mounting hole 31, however, instead of this, it is also allowed that the left end is brought close to (made to approach) the bottom wall 31a while leaving a small gap therebetween. Namely, it is not an essential requirement that both the first actuation port A1 and the first pressure port P1 are completely partitioned by the barrel portion 40a, and a slight leak between these is allowed. It is also allowed that, instead of the illustrated barrel portion 40a, the left end surface of the holder 51 is brought into contact with or close to the bottom wall 31 a of the first mounting hole 31.
The throttle gap G is formed between the check ball 52 and the throttle valve seat 59, however, instead of this or in addition to this, it is also possible that the throttle gap G is formed between the right end surface of the peripheral wall 44a of the valve chamber 44 (right end surface of the check valve seat 53) and the throttle valve seat 59.

Fig. 3A and Fig. 3B show a second embodiment of the present invention. Fig. 3A is a view similar to Fig. 2A. Fig. 3B is a view similar to Fig. 2B.

This second embodiment is different from the first embodiment in the following points.
To the first mounting hole 31 in Fig. 1 B, the plug 36 is attached instead of the meter-out flow control valve 35. In addition, as shown in Fig. 3A and Fig. 3B, a meter-in flow control valve 68 is attached to the second mounting hole 32.

In the bottom wall 32a of the second mounting hole 32 (bottom surface of the hole), one end (end on the second actuation port A2 side) of the second supply and discharge passage 22 is eccentrically opened. In the peripheral wall 32b of the second mounting hole 32 (peripheral surface of the hole), the other end (end on the second pressure port P2 side) of the second supply and discharge passage 22 is opened diagonally.
A barrel portion 70a of a cylindrical casing 70 of the meter-in flow control valve 68 is screwed in the second mounting hole 32, and the left end portion (leading end portion) of the barrel portion 70a is brought into contact with the bottom wall 32a of the second mounting hole 32. The contact portion partitions the second actuation port A2 and the second pressure port P2. The head 70b on the right end of the casing 70 is brought into contact with the outer surface of the flange 3a via a sealing member 71.

Inside the casing 70, a meter-in inlet 73, a rod chamber 76 for housing an adjusting rod 75 to be advancable and retreatable in the axial direction, a throttle valve seat 89 arranged substantially concentrically with the rod chamber 76, and a meter-in outlet 77 are formed in that order.

In detail, a bolt-shaped holder (casing end wall) 81 is screwed inside a left portion of the barrel portion 70a of the casing 70, and at the center of the right end of the holder 81, the throttle valve seat 89 is formed. A valve seat hole of the throttle valve seat 89 is communicatively connected to the meter-in outlet 77 via a communicating passage 90 inside the holder 81.
The throttle valve seat 89 and the rod chamber 76 are arranged substantially concentrically with each other, and the adjusting rod 75 formed in a bolt shape is screwed with the peripheral wall of the rod chamber 76 to be advancable and retreatable, and hermetically sealed by a packing 86. In the right end of the adjusting rod 75, an adjusting hole 87 in which a hexagonal wrench (not shown) is inserted is formed and a lock nut 88 is screwed.
Furthermore, a check ball (check member) 82 is inserted in a valve chamber 74 formed inside the left end portion (leading end portion) of the adjusting rod 75. A check valve seat 83 is formed on an inner peripheral surface of the peripheral wall 74a of the valve chamber 74, and the check ball 82 is brought into contact with the check valve seat 83 by a spring (elastic member) 84.

By advancing and retreating the adjusting rod 75 in the axial direction according to the screw engagement, the check ball 82 is moved with respect to the throttle valve seat 89, and thereby, a throttle gap G formed between the throttle valve seat 89 and the check ball 82 is adjusted.
Namely, the valve elements of the meter-in flow control valve 68 include the check ball 82, the check valve seat 83, and the throttle valve seat 89, etc.

The meter-in flow control valve 68 operates as follows as shown in Fig. 3A and Fig. 3B.
When a pressurized oil is supplied from the second pressure port P2 for locking to the second actuation port A2, the pressurized oil in the second pressure port P2 is supplied to the second actuation port A2 through a peripheral groove 94 of the barrel portion 70a of the casing 70, the meter-in inlet 73, an outer peripheral space of the check valve seat 83, the throttle gap G, the communicating hole 90, and the meter-in outlet 77 in that order. The pressurized oil to be supplied is applied with a great flow resistance during passing through the throttle gap G, so that it is supplied to the second actuation port A2 at a low speed.

On the other hand, when the pressurized oil in the second actuation port A2 is discharged to the second pressure port P2, the pressurized oil in the second actuation port A2 is discharged to the communicating hole 90 of the holder 81 through the meter-in outlet 77, and due to its pressure, the check ball 82 is separated from the check valve seat 83. Thereby, the pressurized oil in the communicating hole 90 is smoothly discharged to the second pressure port P2 through the inside of the valve chamber 74, a communicating hole 93 of the adjusting rod 75, the meter-in inlet 73, and the peripheral groove 94, and smoothly discharged to the second pressure port P2 through an outer peripheral space of the check valve seat 83, the meter-in inlet 73, and a peripheral groove 94.

The second embodiment may be changed as follows.
One end portion (the end portion on the second actuation port A2 side) of the second supply and discharge passage 22 is arranged eccentrically to the second mounting hole 32, however, instead of this, it can be arranged concentrically with the second mounting hole 32. The other end portion (the end portion on the second pressure port P2 side) of the second supply and discharge passage 22 is opened diagonally in the peripheral surface of the second mounting hole 32, however, instead of this, it is allowed to intersect with the second mounting hole 32 at right angles.
The left end portion (leading end portion) of the barrel portion 70a of the cylindrical casing 70 is preferably brought into strong contact with the bottom wall 32a of the second mounting hole 32, however, instead of this, it is also allowed that it is brought close to (made to approach) the bottom wall 32a while leaving a small gap therebetween. Namely, it is not an essential requirement that both the second actuation port A2 and the second pressure port P2 are completely partitioned by the barrel portion 70a, and a slight leak between these is allowed. It is also possible that, instead of the illustrated barrel portion 70a, the left end surface of the holder 81 is brought into contact with or close to the bottom wall 32a of the second mounting hole 32.
The throttle gap G is formed between the check ball 82 and the throttle valve seat 89, however, instead of this or in addition to this, the throttle gap G can be formed between the left end surface of the peripheral wall 74a of the valve chamber 74 (left end surface of the check valve seat 83) and the throttle valve seat 89.

In the case where the work pallet 4 does not have the oil passage 17 and another oil passage (not shown), the clamp 1 is used as follows.
To the first mounting hole 31, instead of the meter-out flow control valve 35, an external pipe for supplying and discharging pressurized oil is connected. To the second mounting hole 32, instead of the meter-in flow control valve 68, another external pipe is connected.
Namely, the female screw portion of the mounting hole 31 and 32 is commonly used for attaching the flow control valve and for connection to the external pipe, and thereby, the clamp 1 can be standardized.

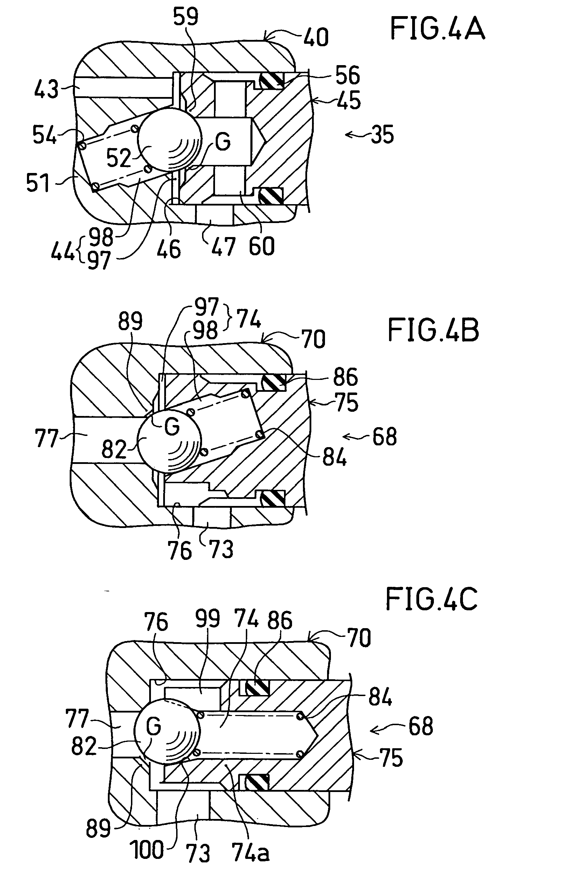

Fig. 4A, Fig. 4B, and Fig. 4C are partial views similar to Fig. 2B or Fig. 3B, showing exemplary variations of the present invention, respectively. In these exemplary variations, members similar to those of Fig. 2B or Fig. 3B are attached with the same reference numerals.

A first exemplary variation of Fig. 4A shows a meter-out flow control valve 35 similar to that of Fig. 2B. The valve chamber 44 is composed of a first valve chamber portion 97 formed on the left portion of the rod chamber 46 and a second valve chamber portion 98 formed diagonally inside the holder 51. According to this construction, by advancing and retreating the adjusting rod 45 in the axial direction, the check ball 52 is allowed to become eccentric to the throttle valve seat 59 provided on the rod 45, so that the throttle gap G between these 59 and 52 can be adjusted.

A second exemplary variation of Fig. 4B shows a meter-in flow control valve 68 similar to that of Fig. 3B. The valve chamber 74 is composed of a first valve chamber portion 97 formed on the left portion of the rod chamber 76 and a second valve chamber portion 98 formed diagonally inside the left end portion (leading end portion) of the adjusting rod 75. According to this construction, by advancing and retreating the adjusting rod 75 in the axial direction, the check ball 82 is allowed to become eccentric to the throttle valve seat 89 in the same manner as in Fig. 4A, so that the throttle gap G between these 89 and 82 can be adjusted.

According to a third exemplary variation of Fig. 4C, in Fig. 4B, the valve chamber 74 is formed concentrically with the adjusting rod 75, and a withdrawing groove 99 is formed at the left end portion (leading end portion) of the peripheral wall 74a of the valve chamber 74. On the leading end of the inner periphery of the peripheral wall 74a, a tapered surface 100 is formed. By advancing and retreating the adjusting rod 75 in the axial direction, similarly to Fig. 4B, the check ball 82 is allowed to become eccentric to the throttle valve seat 89, so that the throttle gap G between these 89 and 82 can be adjusted.

The above-mentioned embodiments and exemplary variations may be further changed as follows.
The check balls 52 and 82 may be changed to another shape such as a poppet shape or a needle shape. The springs 54 and 84 can be replaced with rubber or the like.
The clamp 1 may be a single-acting spring return type instead of the illustrated hydraulic double-acting type, and the working fluid may be a gas such as compressed air instead of the liquid such as pressurized oil. As a matter of course, the clamp 1 is not limited to the illustrated rotary type structure. Instead of attaching to the cylinder apparatus 2 of the clamp 1, the flow control valve of the present invention can also be attached to a cylinder apparatus the use of which is different from that of the clamp.

## Claims

1. A flow control valve, wherein
inside a cylindrical casing (40), a meter-out inlet (43), a valve chamber (44), a rod chamber (46) for housing an adjusting rod (45) to be advancable and retreatable in an axial direction, and a meter-out outlet (47) are communicatively connected in that order,
a throttle valve seat (59) is provided on a leading end portion of the adjusting rod (45), and the throttle valve seat (59) is communicatively connected to the meter-out outlet (47) via a communicating passage (60) inside the adjusting rod (45),
a check member (52) inserted in the valve chamber (44) is urged toward the throttle valve seat (59) by an elastic member (54), and
the throttle valve seat (59) and the check member (52) can be moved relatively by advancing and retreating the adjusting rod (45) in the axial direction, and thereby, a throttle gap (G) formed between at least one of a peripheral wall (44a) of the valve chamber (44) and the check member (52) and the throttle valve seat (59) is adjusted.

2. The flow control valve as set forth in claim 1, wherein
the rod chamber (46) and the valve chamber (44) are arranged substantially concentrically, a check valve seat (53) is provided on an inner peripheral surface of the peripheral wall (44a) of the valve chamber (44), and the check member (52) can be brought into contact with the check valve seat (53) by the elastic member (54).

3. A flow control valve, wherein
inside a cylindrical casing (70), a meter-in inlet (73), a rod chamber (76) for housing an adjusting rod (75) to be advancable and retreatable in an axial direction, a throttle valve seat (89) arranged substantially concentrically with the rod chamber (76), and a meter-in outlet (77) are communicatively connected in that order,
a valve chamber (74) is provided in at least one of a leading end portion of the adjusting rod (75) and the rod chamber (76), and a check member (82) inserted in the valve chamber (74) is urged toward the throttle valve seat (89) by an elastic member (84), and
the check member (82) and the throttle valve seat (89) can be moved relatively by advancing and retreating the adjusting rod (75) in the axial direction, and thereby, a throttle gap (G) formed between at least one of a peripheral wall (74a) of the valve chamber (74) and the check member (82) and the throttle valve seat (89) is adjusted.

4. The flow control valve as set forth in claim 3, wherein
the valve chamber (74) is provided inside the leading end portion of the adjusting rod (75), a check valve seat (83) is provided on an inner peripheral surface of the peripheral wall (74a) of the valve chamber (74), and the check member (82) can be brought into contact with the check valve seat (83) by the elastic member (84).

5. A cylinder apparatus having the flow control valve as set forth in any one of claims 1 to 4, wherein
inside a housing (3) of the cylinder apparatus, a fluid actuation chamber (11, 12) is communicatively connected to a pressure ports (P1, P2) via an actuation port (A1, A2) and a supply and discharge passage (21, 22), and an mounting hole (31, 32) communicatively connected to the supply and discharge passage (21, 22) is opened in an outer surface of the housing (3), and the cylindrical casing (40, 70) is attached to the mounting hole (31, 32), and
the actuation port (A1, A2) is communicatively connected to the meter-out inlet (43) or the meter-in outlet (77), and the pressure port (P1, P2) is communicatively connected to the meter-out outlet (47) or the meter-in inlet (73).

6. A cylinder apparatus having a flow control valve, wherein
inside a housing (3) of the cylinder apparatus, a fluid actuation chamber (11, 12) is communicatively connected to a pressure port (P1, P2) via an actuation port (A1, A2) and a supply and discharge passage (21, 22),
an mounting hole (31, 32) opened in an outer surface of the housing (3) is provided, one end portion of the supply and discharge passage (21, 22) is opened in a bottom surface of the mounting hole (31, 32), and the other end portion of the supply and discharge passage (21, 22) is opened in a peripheral surface of the mounting hole (31,32),
a cylindrical casing (40, 70) is attached to the mounting hole (31, 32), and a leading end portion of the cylindrical casing (40, 70) is brought into contact with or made to approach a bottom wall (31 a, 32a) of the mounting hole (31, 32), and thereby, the actuation port (A1, A2) and the pressure port (P1, P2) are partitioned, and
valve elements (52, 53, and 59) (82, 83, and 89) of a flow control valve (35, 68) are arranged inside the cylindrical casing (40, 70) so that the actuation port (A1, A2) and the pressure port (P1, P2) can be communicatively connected to each other via the valve elements.

7. The cylinder apparatus having the flow control valve as set forth in claim 6, wherein
a barrel portion (40a, 70a) of the cylindrical casing (40, 70) is screwed in the mounting hole (31, 32).
